# EUROPEAN PATENT APPLICATION

(11) **EP 2 879 344 A1**
(43) Date of publication of application: **03.06.2015**
(21) Application number: 13382480.5
(22) Date of filing: 28.11.2013
(51) Int. Cl.: H04L 29/06, H04W 4/00

(54) **A method and a system for integration of legacy devices in a horizontal M2M platform**

(71) Applicant: Telefonica Digital España, S.L.U., 28013 Madrid (ES)
(72) Inventor: García Puga, Javier, 28013 Madrid (ES); Ochoa Fuentes, Miguel, 28013 Madrid (ES)
(74) Representative: Carlos Hernando, Borja

(57) **Abstract**

The method comprises inspecting, at a point external to legacy devices, the transport layer associated to said legacy devices to look for at least part of legacy protocol data, dissecting and translating the found legacy protocol data into horizontal M2M protocol data and sending the latter to the horizontal M2M platform.

A second aspect of the invention relates to a system for integration of legacy devices in a horizontal M2M platform adapted for performing the method of the first aspect.

## Description

### Field of the Art

The present invention generally relates, in a first aspect, to a method for integration of legacy devices in a horizontal M2M platform, based on the capture of legacy protocol data in the legacy devices transport layer and the translation thereof into horizontal M2M protocol data.

A second aspect of the invention relates to a system for integration of legacy devices in a horizontal M2M platform adapted for performing the method of the first aspect.

### Prior State of the Art

Internet is evolving from a present where human interactions are predominant to an Internet of Things (IoT), where Machine to Machine (M2M) communications between devices, software and services operate with little or no human intervention. Sensors collect data and send it to endpoint services that process entry data and generate intelligible information that can be consumed by other services and devices.

In Economist Intelligence Unit's opinion "M2M communication will offer a way to drastically change the way in which critical services are delivered over the next ten years".

This incremental usage of M2M communications in heterogeneous environments is resulting in the creation and use of different Vertical M2M solutions. Currently M2M is already being implemented in transportation, energy, industrial telemetry, healthcare, manufacturing, consumer electronics, smart homes, etc. But these Vertical M2M applications, without a widespread M2M standard, are isolated in different universes that try to solve specific problems and even worse, each environment is fragmented with several proprietary solutions. This interworking problem impedes large scale M2M deployments.

In Smart City systems the obstacle is bigger, because they have to aggregate data from a variety of vertical M2M applications like metering, light, rubbish collection, etc..., that work with their own sensors, protocols and endpoint services while Smart City dashboards must present uniform interfaces and reports to city managers, including mixed data mining results. In this case, a horizontal centralized M2M platform is mandatory for centralizing data from each vertical M2M application.

Although horizontal M2M initiatives are welcome there is a basic problem with existing systems due to modifications in these systems that are always needed to integrate non-compliant legacy devices and protocols with the new horizontal M2M platform.

There have been a number of horizontal M2M initiatives in place. An example of such an initiative has been driven by The European Telecommunications Standards Institute (ETSI) M2M group, which addresses the need for a common M2M Service Layer shared by application and network layers.

ETSI M2M architecture [1] solves the legacy devices integration problem with the introduction of a new element called Device/Gateway/Network Interworking Proxy (xIP where x depends on location deployment) that provides interworking between ETSI non-compliant devices and the Service Capability Layer.

InterDigital's M2M Software Development Platform (SDP) [2] is an ETSI standard-based solution that includes an intelligent Interworking Proxy Unit (IPU) to connect and convert existing or legacy service platforms into a standard-based platform without a complete overhaul. It enables data access and exchange between standard-based M2M network and legacy M2M network. IPU is implemented as a service capability of M2M Gateway or M2M Server.

InterDigital's IPU enables:
1. Legacy devices communicate to Standard M2M Network.
2. Standard M2M devices communicate to Legacy M2M Network via IPU
3. Existing Legacy Apps access Standard M2M Data/Devices
4. Existing Standard M2M apps access Legacy Data/Devices

In practice, current implementations based on Interworking Proxy elements have the following unsolvable problems:
- In all cases the legacy system; device or service layer, requires to be modified, in order to send the traffic through the Interworking Proxy. This could be viable for HTTP based traffic, although the effort and cost needed to modify the devices could be unacceptable in most of the cases.
- In the case of protocols different to HTTP, they couldn't work with the Interworking Proxy.

Other alternatives are to translate legacy protocol data to operate with new horizontal M2M protocol. Once again, the effort and cost needed to modify the devices could be unacceptable in most of the cases.

### REFERENCES:

[1] ETSI M2M Technical Report Draft: Machine to Machine Communications (M2M); Interworking between the M2M Architecture and M2M Area Network technologies. May 2013.
[2] Interdigital. Standardized Machine-to-Machine (M2M) Software Development Platform (SDP) White Paper. October 2012.

### Description of the Invention

It is an object of the present invention to provide an alternative to the prior state of the art, which solves the aforementioned problems, by providing a network based, unique and centralized point in which interworking can be transparently managed, and which allows vertical M2M providers to be able to integrate their proprietary solutions in a Horizontal M2M platform without any required development.

To that end, the present invention relates, in a first aspect, to a method for integration of legacy devices in a horizontal M2M platform, wherein said legacy devices use a legacy protocol for communicating data to a target vertical M2M server, the method comprising translating said legacy protocol data into horizontal M2M protocol data and sending said horizontal M2M protocol data to said horizontal M2M platform.

Contrary to the known methods, the one proposed by the first aspect of the invention comprises inspecting, at a point external to said legacy devices, the transport layer associated to said legacy devices to look for at least part of said legacy protocol data, dissecting and translating the found legacy protocol data into said horizontal M2M protocol data and sending the latter to the horizontal M2M platform.

Depending on the embodiment, the method comprises performing the transport layer inspection at an intermediate point between the legacy devices and the target vertical M2M server or within the target vertical M2M server.

The method of the first aspect of the invention comprises, preferably, intercepting the found legacy protocol data and if said legacy protocol data does not arrive to the target vertical M2M server directly redirecting the same towards said target vertical M2M server once at least said dissection has been performed.

For an embodiment, the method of the first aspect of the invention comprises performing said legacy protocol data intercepting, dissection, protocol translation and sending of the translated M2M protocol data to the horizontal M2M platform by means of a Deep Packet Inspection (DPI) device attached to a gateway support node of a mobile access network providing access to the target vertical M2M server, such as a GGSN (Gateway General Packet Radio Service (GPRS) Support Node).

According to an embodiment, the interception of the found legacy protocol data comprises, once a legacy device has been discovered by finding legacy protocol data coming therefrom, redirecting the network communication associated thereto towards an intermediate entity in charge of performing the dissection and translation of the found legacy protocol data and of the sending of the translated M2M protocol data to the horizontal M2M platform, and also in charge of performing the redirection of the intercepted legacy protocol data towards the target vertical M2M server.

Said discovering of a legacy device is performed, for preferred embodiments, by finding, in the found legacy protocol data, a particular APN (Access Point Name), proprietary or private. Based on this APN, a gateway support node (GGSN) of the mobile access network can redirect the network communication towards an intermediate entity in charge of performing said dissection and translation.

For another embodiment, the method of the first aspect of the invention comprises looking for and intercepting only legacy protocol data following a selected pattern, redirecting a copy of said legacy protocol data towards an intermediate entity in charge of performing said dissection and translation of the intercepted data and of said sending of the translated M2M protocol data to the horizontal M2M platform, the original legacy protocol data arriving to the target vertical M2M server directly.

The method of the first aspect of the invention comprises, for an embodiment, performing the above mentioned inspection, interception and redirection of legacy protocol data towards the intermediate entity by means of a proxy through which said legacy devices connect to an access network providing access to the intermediate entity and to the target vertical M2M server.

According to an alternative embodiment, the method of the first aspect of the invention comprises performing the inspection, interception and redirection of legacy protocol data towards the horizontal M2M platform by means of an interworking probe arranged in an access network to which the legacy devices are connected and which provides access to the target vertical M2M server or arranged in a core network connected to the access network, said interworking probe performing said redirection through a VPN (Virtual Private Network) towards an interworking server connected to the horizontal M2M platform, where said interworking server is the above called intermediate entity.

For a variant of the above paragraph embodiment, said access network is a mobile access network and the interworking probe is attached to a gateway support node (GGSN) of the mobile access network.

For another variant of said embodiment, the access network is a mobile access network, the core network is a fixed core network and the interworking probe is attached to a switch device mirroring towards the interworking probe at least the legacy protocol data directed to the target vertical M2M server.

According to an embodiment, when the legacy protocol data is ciphered, the method of the first aspect of the invention comprises decrypting the cyphered data before its dissection.

A second aspect of the invention relates to a system for integration of legacy devices in a horizontal M2M platform, comprising:
- a horizontal M2M platform;
- a plurality of legacy devices using a legacy protocol for communicating data to a target vertical M2M server;
- translating means for translating said legacy protocol data into horizontal M2M protocol data; and
- communication means for communicating said legacy devices with said horizontal M2M platform for the sending of said horizontal M2M protocol data to said horizontal M2M platform.

Contrary to the known systems, the one proposed by the second aspect of the invention further comprises:
- inspection means arranged at a point external to said legacy devices for inspecting the transport layer associated to said legacy devices to look for at least part of said legacy protocol data, and
- dissection and translation means arranged for receiving the legacy protocol data found by said inspection means, for, respectively, dissecting and translating the found legacy protocol data into said horizontal M2M protocol data and sending the latter, via said communication means, to the horizontal M2M platform.

For a preferred embodiment, said inspection means, said communication means and said dissection and translation means implement the method of the first aspect of the invention.

For an embodiment of the system of the second aspect of the invention, the dissection and translation means comprise an interworking server connected to the horizontal M2M platform, and the inspection means comprise an interworking probe arranged in an access network to which the legacy devices are connected and which provides access to a target vertical M2M server or arranged in a core network connected to the access network, where the interworking probe is configured and arranged for intercepting at least the found legacy protocol data and direct it to the interworking server.

### Brief Description of the Drawings

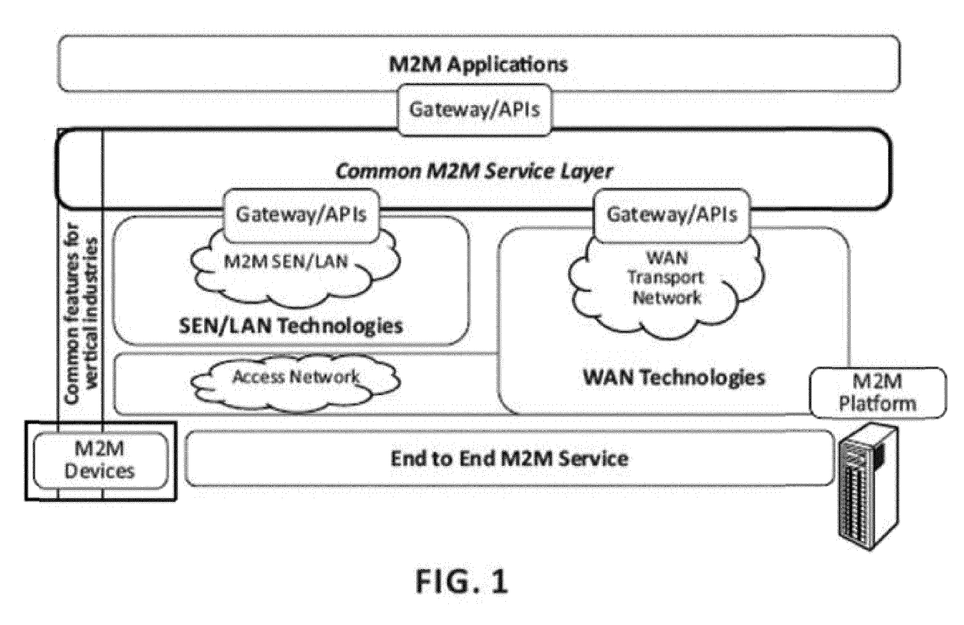

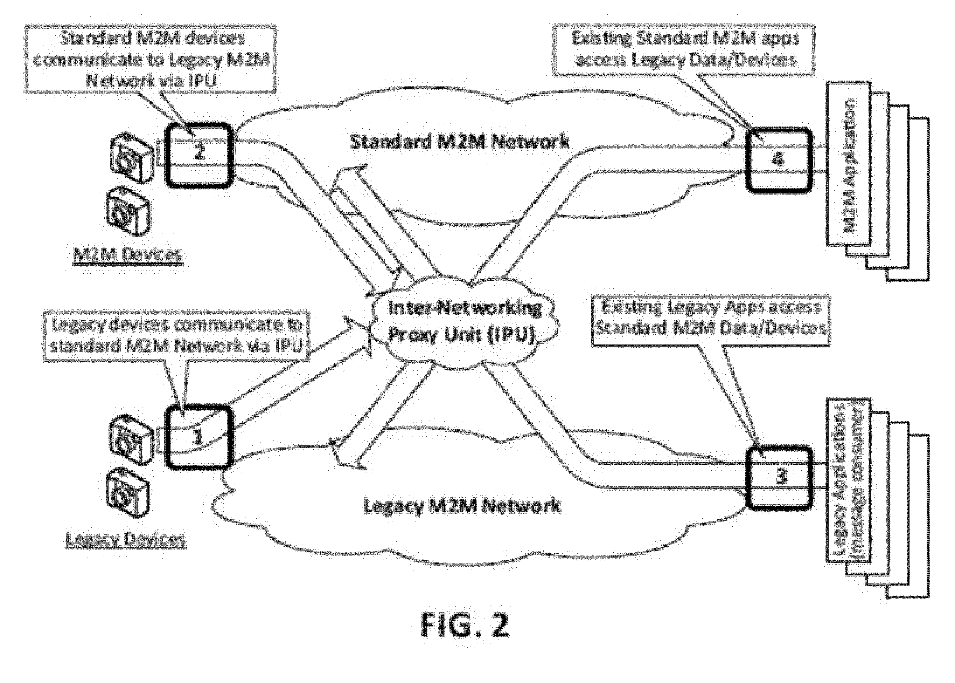

The previous and other advantages and features will be better understood from the following detailed description of embodiments, with reference to the attached drawings (some of which depict prior art architectures, specifically Figures 1 and 2), which must be considered in an illustrative and non-limiting manner, in which:
Fig. 1 shows the ETSI M2M Architecture of prior art reference [1];
Fig. 2 shows the Interdigital's Interworking Proxy Unit of prior art reference [2];
Fig. 3 schematically shows the system of the second aspect of the invention, for a generic embodiment, applied to an access network communicating two legacy sensors/Gateways to a Vertical M2M Application/server;
Fig. 4 schematically shows an embodiment of the method and system of the present invention, applied to a Transparent Translation of Legacy Sensor Data;
Fig. 5 schematically shows an embodiment of the method and system of the present invention, applied to a Transparent Translation of Encrypted Legacy Sensor Data;
Fig. 6 schematically shows an embodiment of the method and system of the present invention, applied to Snooping Mobile Network Sensor Traffic for legacy protocol data;
Fig. 7 schematically shows an embodiment of the method and system of the present invention, applied to Snooping Fixed Network Sensor Traffic for legacy protocol data; and
Fig. 8 schematically shows an embodiment of the method and system of the present invention, applied to Redirecting to a Proxy of legacy protocol data.

### Detailed Description of Several Embodiments

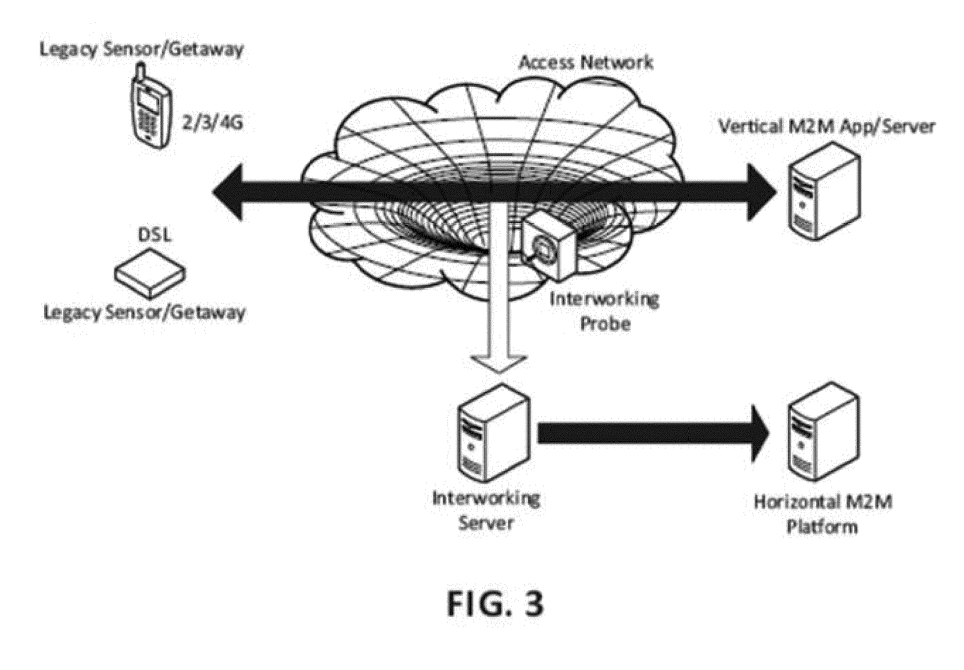

The system of the second aspect of the invention is schematically shown in Fig. 3 for a generic embodiment, for which the system is based on development of specific hardware and software residing on a trusted server called Interworking Server (IS) and an Interworking Probe (IP) that inspects the network transport layer, to give vertical M2M legacy devices the ability to transparently integrate themselves in a general horizontal M2M platform.

The system of the first aspect of the invention has two main components:
- An Interworking Server (IS). This server will:
   - Allow recollection of legacy data.
   - Translate from legacy protocols to horizontal protocols.
   - Send translated data to horizontal M2M platform.
   - Allow horizontal M2M apps access legacy data/devices.
- A set of Interworking Probes (IP) on mobile network premises. These probes will:
   - Allow discovery of legacy devices.
   - Allow redirection of legacy data, whether the original one going to the vertical M2M server or a copy thereof.

Generally, legacy device recognition is based on the usage of a specific M2M APN of the mobile network. So a legacy device has to use a mobile network and has to change the default APN point to this specific M2M APN.

However, it is also possible to provide an alternative without modifying the APN configuration in the device, i.e., depending on the network configuration of the operator, not to require modifying the APN in the device. In this case, it will be necessary to modify, in the network, the DNS used to resolve the APN private DNS network.

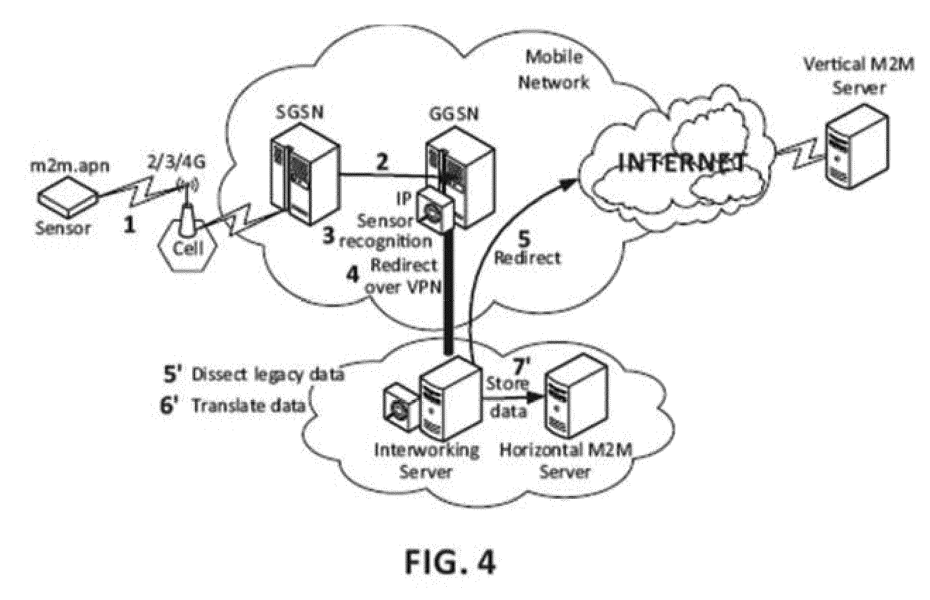

Next different specific embodiments of the method and system of the present invention are described, and graphically supported by appended Figures 4 to 8 in which the different actions performed by the corresponding entities of the system according to the method of the invention are also indicated by legends placed adjacent the respective entity.

With reference to Fig. 4, legacy devices will operate without changes, except a configuration change to point to a specific M2M APN, but underneath the process will be as follows:
1. Firstly, the legacy device will send data to a Vertical M2M application through mobile network means as usual.
2. Sensor data will arrive to a mobile GGSN system through a SGSN element.
3. IP attached to a GGSN element will discover legacy devices based on the usage of a specific M2M APN of the mobile network.
4. IP will redirect network communications of discovered legacy devices to IS for dissection through a VPN secure channel.
5. IS will forward device originated IP packets to the original M2M Vertical server. This step can be done using dedicated & specialized HW or SW, or other low cost alternative like commodity HW and IP Tables.
5'. Since all the traffic is passing through the IS, it will sniff and dissect the received data packets.
6'. IS will decode the legacy protocol.
7'. IS will send the sensor measures to the horizontal M2M server according to its requirements, in order to store them.

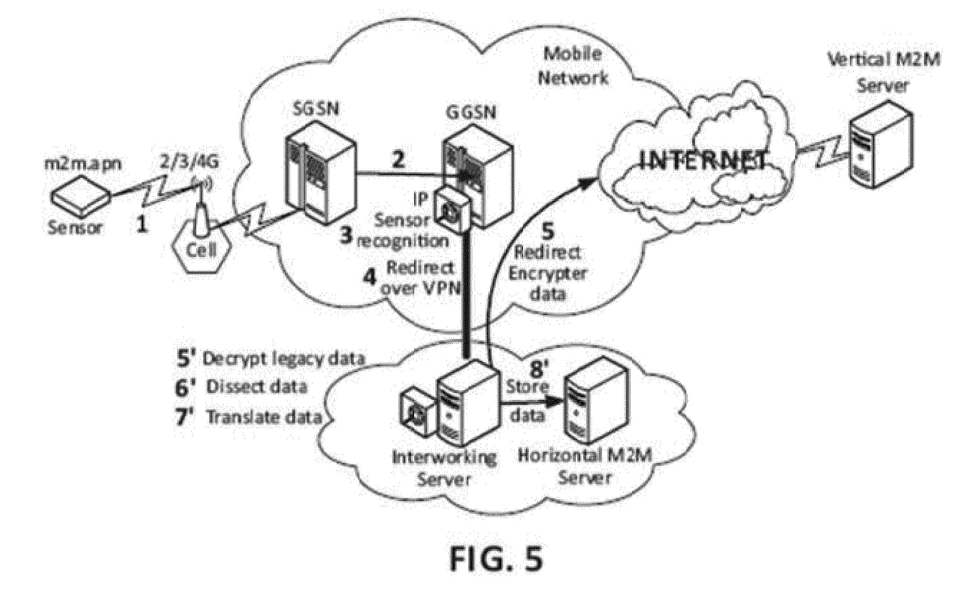

Figure 5 shows another embodiment, for which the legacy protocol data is encrypted. In this case where legacy device encrypts data packets with a key, for example a sensor sending measures over the HTTPS (Hyper Text Transfer Protocol Secure) protocol where the transferred data is ciphered with the target Server Public Key, a decrypting step is required previous to the dissection process.

There are two possibilities in order to decipher encrypted legacy data:
I. IS will use the target M2M Server Key, for example the M2M Server Private Key in a HTTPs connection.
II. IS will generate an Intermediate Server Key (ISK), for example an intermediate CA (Certification Authority) Certificate and key pair in a HTTPs connection. If device trusts in this new CA certificate then IS will be able to operate like a Man in the Middle (MITM), deciphering ongoing communications with the ISK and ciphering the outgoing data with the Vertical M2M Key.

There is also possible to avoid some issues with devices which complain when the issue certificate name does not match the site domain name. In this case, it will be necessary to generate this kind of certificate dynamically, that is to say, to generate site certificates that match the requested site domain name.

So, when IS receives the ciphered data packet then IS must use the required Key to decrypt data (step 5'). In the HTTPS sample, IS will need the target M2M Server Private Key or the Intermediate Private Key.

In Figure 5, steps 1 to 5 correspond to steps 1 to 5 of Figure 4, while steps 6', 7' and 8' correspond to steps 5', 6' and 7' of Figure 4.

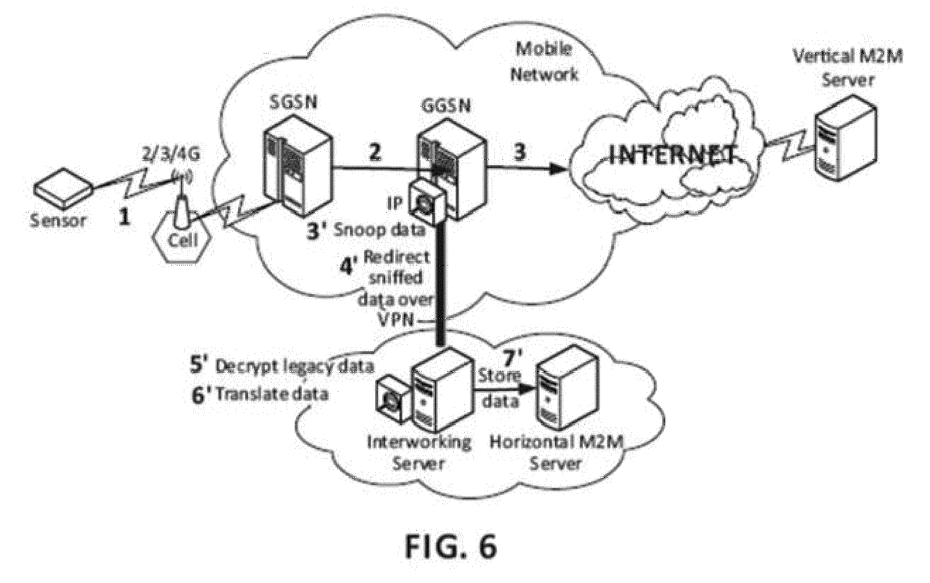

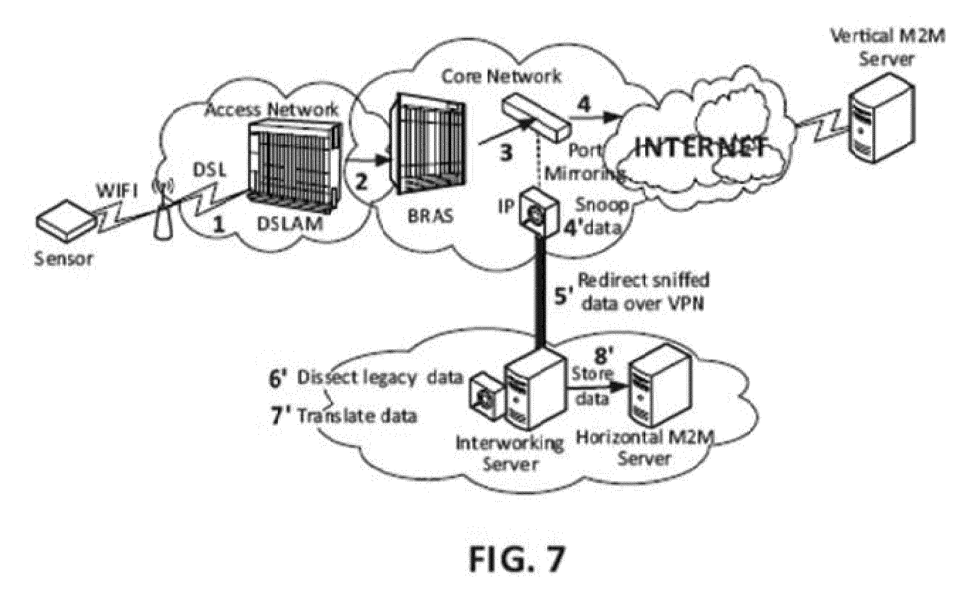

Figures 6 and 7 show two variants of another embodiment of the method and system of the present invention, for which network traffic is snooped based on Pattern-Matching.

In this case, IP will not redirect all network traffic to IS but will snoop network communications all the time and only data that follows a selected pattern will be redirected to IS.

No configuration change is required in the legacy devices. Mobile (Fig. 6) and fixed (Fig. 7) networks can be used.

Regarding Fig. 6, the data integration process with legacy devices operating in a Mobile Network is as follows:
1. Firstly, the legacy device will send data to Vertical M2M application through mobile network means as usual.
2. Sensor legacy data will arrive to a mobile GGSN system through a SSGN element.
3. Sensor legacy data will arrive to Vertical M2M server without any redirection as usual.
3'. IP attached to GGSN will be snooping network communications all the time, but only legacy data that follows a selected pattern will be intercepted.
4'. IP will send a copy of the intercepted legacy data to IS for dissection over a VPN secure channel, without interrupting the sensor legacy data traffic towards the Vertical M2M server.
5'. IS will dissect received data packets.
6'. IS will translate legacy protocol.
7'. IS will send sensor measures to horizontal M2M server according to its requirements.

The data integration process with legacy devices operating in a Fixed Network is depicted in Fig. 7 and comprises the following steps:
1. Firstly, the legacy device will send data to Vertical M2M application through mobile network means as usual.
2. Sensor legacy data will arrive at the Fixed Core Network through the Fixed Access Network elements.
3. A Switch element inside Core Network will do network traffic data port mirroring including sensor legacy data.
4. Sensor legacy data will arrive to Vertical M2M server without any redirection as usual.
4'. IP attached to the Switch device will be snooping network communications through port mirroring mechanism, but only data that follows a selected pattern will be intercepted.
5'. IP will send intercepted data to IS for dissection over a VPN secure channel.
6'. IS will dissect received data packets.
7'. IS will translate legacy protocol.
8'. IS will send sensor measures and location to horizontal M2M server according to its requirements.

For the systems of both Figures 6 and 7, if legacy device encrypts data packets with a key, then the IS must own corresponding key (secret or private key) in order to decrypt data before dissecting. In this case, MITM is not possible.

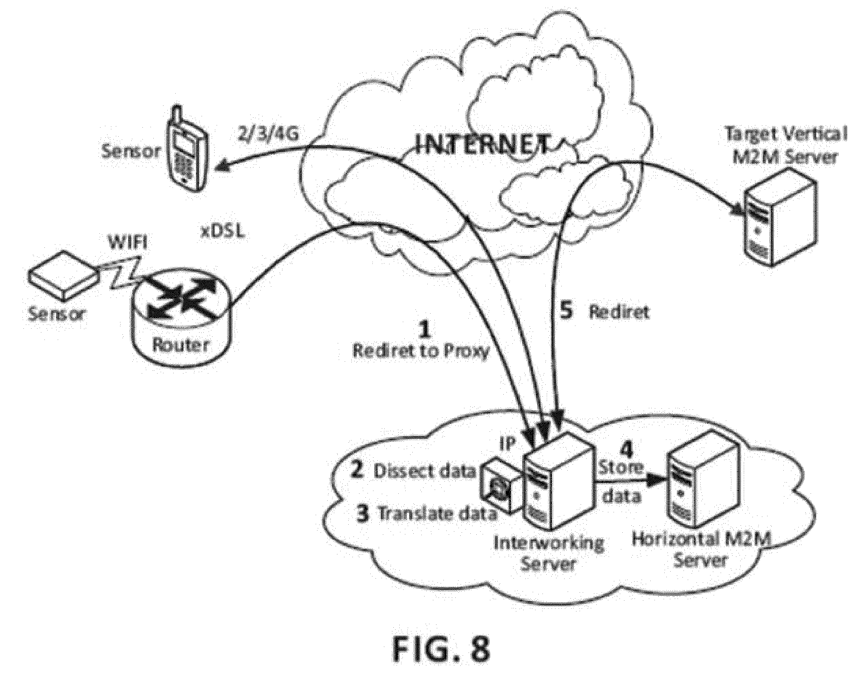

Finally, Figure 8 shows an alternative embodiment, for which device data network traffic will be redirected to a Proxy, the IS, before passing through the Access Network.

A redirect mechanism to IS will be required. This method can be explicit or transparently configured. Although Fig. 8 depicts a Mobile network, both Mobile and fixed network can be used.

The data integration process with legacy devices will be as follows:
1. Firstly, the legacy device will send legacy data to Vertical M2M application through a Proxy mechanism that redirects legacy data to the IS.
2. IS or IP will dissect received legacy data packets.
3. IS will translate legacy protocol.
4. IS will send the translated data, i.e. sensor measures, and location to horizontal M2M server according to its requirements, for their storage therein.
5. IS will redirect legacy data to the target Vertical M2M server.

For this embodiment, if legacy device encrypts data packets, then the IS can use the two alternatives already explained above regarding other embodiments:
1. IS will use target Vertical M2M secret/private key.
2. IS can act as a MITM, creating a key on the fly and deciphering ongoing communications with this key and ciphering the outgoing data with Vertical M2M key.

Other embodiments of the present invention, which are not illustrated, are:
- Using DPIs (Deep Packet Inspection) in the mobile network. In this case, a DPI is installed in the GGSN itself. Therefore it is not necessary to redirect the traffic through the VPN. The 5' and 6' steps are carried out by the DPI itself, which will send the traffic to the Horizontal M2M Server.
- Installing the IS in the customer's premises, that is, the Vertical M2M Server.

A person skilled in the art could introduce changes and modifications in the embodiments described without departing from the scope of the invention as it is defined in the attached claims.

## Claims

1. A method for integration of legacy devices in a horizontal M2M platform, wherein said legacy devices use a legacy protocol for communicating data to a target vertical M2M server, the method comprising translating said legacy protocol data into horizontal M2M protocol data and sending said horizontal M2M protocol data to said horizontal M2M platform, wherein the method is **characterized in that** it comprises inspecting, at a point external to said legacy devices, the transport layer associated to said legacy devices to look for at least part of said legacy protocol data, dissecting and translating the found legacy protocol data into said horizontal M2M protocol data and sending the latter to the horizontal M2M platform.

2. The method of claim 1, comprising performing said transport layer inspection at an intermediate point between said legacy devices and said target vertical M2M server or within said target vertical M2M server.

3. The method of claim 2, comprising intercepting the found legacy protocol data and if said legacy protocol data does not arrive to the target vertical M2M server directly redirecting the same towards said target vertical M2M server once at least said dissection has been performed.

4. The method of claim 3, comprising performing said legacy protocol data intercepting, dissection, protocol translation and sending of the translated M2M protocol data to the horizontal M2M platform by means of a Deep Packet Inspection device attached to a gateway support node (GGSN) of a mobile access network providing access to said target vertical M2M server.

5. The method of claim 3, wherein said interception of the found legacy protocol data comprises, once a legacy device has been discovered by finding legacy protocol data coming therefrom, redirecting the network communication associated thereto towards an intermediate entity in charge of performing said dissection and translation of the found legacy protocol data and of said sending of the translated M2M protocol data to the horizontal M2M platform, and also in charge of performing said redirection of the intercepted legacy protocol data towards the target vertical M2M server.

6. The method of claim 3, comprising looking for and intercepting only legacy protocol data following a selected pattern, redirecting a copy of said legacy protocol data towards an intermediate entity in charge of performing said dissection and translation of the intercepted data and of said sending of the translated M2M protocol data to the horizontal M2M platform, the original legacy protocol data arriving to the target vertical M2M server directly.

7. The method of claim 5 or 6, comprising performing said inspection, interception and redirection of legacy protocol data towards the intermediate entity by means of a proxy through which said legacy devices connect to an access network providing access to said intermediate entity and to said target vertical M2M server.

8. The method of claim 5 or 6, comprising performing said inspection, interception and redirection of legacy protocol data towards the horizontal M2M platform by means of an interworking probe (IP) arranged in an access network to which said legacy devices are connected and which provides access to said target vertical M2M server or arranged in a core network connected to said access network, said interworking probe (IP) performing said redirection through a VPN towards an interworking server (IS) connected to said horizontal M2M platform, where said interworking server (IS) is said intermediate entity.

9. The method of claim 8, wherein said access network is a mobile access network and wherein said interworking probe (IP) is attached to a gateway support node (GGSN) of the mobile access network.

10. The method of claim 8, wherein said access network is a mobile access network, said core network is a fixed core network and said interworking probe (IP) is attached to a switch device mirroring towards the interworking probe (IP) at least the legacy protocol data directed to the target vertical M2M server.

11. The method of claim 5, comprising performing said discovering of a legacy device by finding, in the found legacy protocol data, a particular APN, proprietary or private.

12. The method of any of the previous claims, wherein when said legacy protocol data is ciphered, the method comprises decrypting said cyphered data before its dissection.

13. A system for integration of legacy devices in a horizontal M2M platform, comprising:
- a horizontal M2M platform;
- a plurality of legacy devices using a legacy protocol for communicating data to a target vertical M2M server;
- translating means for translating said legacy protocol data into horizontal M2M protocol data; and
- communication means for communicating said legacy devices with said horizontal M2M platform for the sending of said horizontal M2M protocol data to said horizontal M2M platform;
wherein the system is **characterized in that** it further comprises:
- inspection means arranged at a point external to said legacy devices for inspecting the transport layer associated to said legacy devices to look for at least part of said legacy protocol data, and
- dissection and translation means arranged for receiving the legacy protocol data found by said inspection means, for, respectively, dissecting and translating the found legacy protocol data into said horizontal M2M protocol data and sending the latter, via said communication means, to the horizontal M2M platform.

14. The system of claim 13, wherein said inspection means, said communication means and said dissection and translation means implement the method of any of claims 1 to 12.

15. The system of claim 14, wherein said dissection and translation means comprise an interworking server (IS) connected to said horizontal M2M platform, and said inspection means comprise an interworking probe (IP) arranged in an access network to which said legacy devices are connected and which provides access to a target vertical M2M server or arranged in a core network connected to said access network, where said interworking probe (IP) is configured and arranged for intercepting at least the found legacy protocol data and direct it to said interworking server (IS).
